# EUROPÄISCHE PATENTSCHRIFT

(11) **EP 3 259 497 B1**
(45) Veröffentlichungstag und Bekanntmachung des Hinweises auf die Patenterteilung: **19.12.2018**
(21) Anmeldenummer: 16701047.9
(22) Anmeldetag: 20.01.2016
(51) Int. Cl.: F16H 3/089

(54) **DOPPELKUPPLUNGSGETRIEBE FÜR EIN KRAFTFAHRZEUG**
DUAL CLUTCH TRANSMISSION FOR A MOTOR VEHICLE
BOÎTE DE VITESSES À DOUBLE EMBRAYAGE POUR VÉHICULE À MOTEUR

(30) Priorität: 19.02.2015 DE 102015002134
(43) Veröffentlichungstag der Anmeldung: 27.12.2017
(73) Patentinhaber: Audi AG, 85045 Ingolstadt (DE)
(72) Erfinder: HUMMEL, Steffen, 85055 Ingolstadt (DE)
(86) Internationale Anmeldenummer: PCT/EP2016/051114
(87) Internationale Veröffentlichungsnummer: WO 2016/131597

(56) Entgegenhaltungen:
- WO-A1-2016/023792
- DE-A1-102011 089 167
- DE-A1-102012 013 248
- DE-A1-102012 220 675

## Beschreibung

Die vorliegende Erfindung betrifft ein Doppelkupplungsgetriebe für ein Kraftfahrzeug gemäß dem Oberbegriff des Patentanspruchs 1.

Derartige Doppelkupplungsgetriebe haben neben einem guten Wirkungsgrad unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der lastschaltbaren Kupplungen aktiviert wird. Dabei sind im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Aus der DE 10 2012 220 675 A1 ist ein Getriebe für ein Kraftfahrzeug bekannt, welches unter den Wortlaut des Oberbegriffes des Anspruches 1 fällt. Aus der WO 2016/023792 A1 ist ein Geschwindigkeits-Wechselgetriebe für ein Kraftfahrzeug bekannt.

Aus der DE 10 2012 013 248 A1 ist eine Antriebsvorrichtung für Kraftfahrzeuge bekannt. Aus der DE 10 2011 089 167 A1 ist ein Doppelkupplungsgetriebe in Vorgelegebauweise bekannt.

Die Aufgabe der Erfindung besteht darin, ein Doppelkupplungsgetriebe bereitzustellen, das bei einer baulich günstigen Konstruktion größere Freiheitsgrade in der Funktionalität (Schaltstrategie) und in der Auslegung der Gangstufen aufweist.

Bei einem gängigen Doppelkupplungsgetriebe sind auf den Eingangswellen des ersten Teilgetriebes und des zweiten Teilgetriebes Festzahnräder der jeweiligen Radebenen drehfest angeordnet. Um im Fahrbetrieb einen einwandfreien Momentenfluss durch das Doppelkupplungsgetriebe zu gewährleisten, sind die Eingangswellen entsprechend materialintensiv auszulegen. Zudem drehen sämtliche Festzahnräder der jeweils aktivierten Eingangswelle im Fahrbetrieb mit, wodurch sich ein hohes Trägheitsmoment des aktivierten Teilgetriebes ergibt.

Die Aufgabe ist durch die Merkmale des Patentanspruchs 1 gelöst. Besonders vorteilhafte Weiterbildungen und Ausgestaltungen der Erfindung sind Gegenstand der abhängigen Ansprüche.

Gemäß dem kennzeichnenden Teil des Patentanspruches 1 sind die Eingangswellen komplett frei von darauf angeordneten drehfesten Zahnrädern der Radebenen (RE-1 bis RE-8). Jede der Eingangswellen weist genau ein, in Axialrichtung beidseitig schaltbares Schaltelement (SE-A und SE-C) auf. Mittels des ersten Schaltelements (SE-C) ist die erste Eingangswelle mit sämtlichen Radebenen (RE-1 bis RE-4) des ersten Teilgetriebes (A) kuppelbar oder davon abkuppelbar. Mittels des zweiten Schaltelements (SE-A) ist die zweite Eingangswelle mit sämtlichen Radebenen (RE-5 bis RE-8) des zweiten Teilgetriebes (B) kuppelbar oder davon abkuppelbar.

Erfindungsgemäß tragen daher die beiden koaxialen Eingangswellen nicht mehr Festzahnräder, sondern lediglich die beiden ersten und zweiten Schaltelemente. Dadurch können die Eingangswellen im Vergleich zum obigen Stand der Technik wesentlich materialreduzierter ausgelegt werden. Zudem können mittels der ersten und zweiten Schaltelemente (SE-C und SE-A) Radebenen im jeweils aktivierten Teilgetriebe zumindest teilweise vom Momentenfluss abgekoppelt werden (das heißt stillgelegt werden), wodurch das Trägheitsmoment des aktivierten Teilgetriebes reduzierbar ist. Dies führt bei einem Schaltvorgang zu einer Verkürzung von Schaltzeiten bzw. zu einer Reduzierung des für den Schaltvorgang erforderlichen Energieaufwandes.

Das im ersten Teilgetriebe angeordnete erste Schaltelement (SE-C) ist in der Axialrichtung beidseitig schaltbar. In diesem Fall kann das erste Schaltelement (SE-C) des ersten Teilgetriebes (A) jeweils auf ein, auf der ersten Eingangswelle gelagertes antriebsseitiges Loszahnrad der ersten Radebene (RE-1) oder auf eine, auf der ersten Eingangswelle koaxial gelagerte antriebsseitige Hohlwelle gekuppelt werden. Die auf der ersten Eingangswelle drehgelagerte, antriebsseitige Hohlwelle trägt zwei antriebsseitige Festzahnräder, die jeweils der zweiten Radebene (RE-2) und der dritten Radebene (RE-3) zugeordnet sind.

Auf der antriebsseitigen Hohlwelle des ersten Teilgetriebes (A) ist zusätzlich ein antriebsseitiges Zahnrad der vierten Radebene (RE-4) lose gelagert. Zur trieblichen Verbindung mit der antriebsseitigen Hohlwelle weist diese ein drittes Schaltelement (SE-D) auf, mit dem das losgelagerte antriebsseitige Zahnrad der vierten Radebene (RE-4) mit der antriebsseitigen Hohlwelle des ersten Teilgetriebes (A) kuppelbar ist.

Dem zweiten Teilgetriebe (B) ist eine, an dem ersten Teilgetriebe (A) in der Axialrichtung unmittelbar angrenzende fünfte Radebene (RE-5) zugeordnet. Die fünfte Radebene (RE-5) weist ein antriebsseitiges Zahnrad auf, das auf der zweiten Eingangswelle drehbar gelagert ist und mittels des obigen dritten Schaltelementes (SE-D) an die antriebsseitige Hohlwelle des ersten Teilgetriebes (A) kuppelbar ist. Auf diese Weise kann die fünfte Radebene (RE-5) auf beide Teilgetriebe (A, B) geschaltet werden.
Das von der zweiten Eingangswelle getragene zweite Schaltelement (SE-A) ist in Axialrichtung beidseitig schaltbar (zum Beispiel als Doppelsynchronkupplung). In der Axialrichtung des zweiten Schaltelementes (SE-A) im zweiten Teilgetriebe (B) kann auf der einen Seite des zweiten Schaltelements (SE-A) ein auf der zweiten Eingangswelle gelagertes antriebsseitiges Loszahnrad der achten Radebene (RE-8) und auf der anderen Seite des zweiten Schaltelements (SE-A) eine auf der zweiten Eingangswelle koaxial gelagerte antriebsseitige Hohlwelle angeordnet sein. Die antriebsseitige Hohlwelle und das obige Loszahnrad der achten Radebene können (über das zweite Schaltelement SE-A) alternierend mit der zweiten Eingangswelle kuppelbar sein. Die antriebsseitige Hohlwelle des zweiten Teilgetriebes (B) kann bevorzugt ein antriebsseitiges Festzahnrad der siebten Radebene (RE-7) tragen sowie ein antriebsseitiges Loszahnrad der sechsten Radebene (RE-6) tragen. Zum Schalten des antriebsseitigen Loszahnrads der sechsten Radebene (RE-6) kann die auf der zweiten Eingangswelle koaxial gelagerte, antriebsseitige Hohlwelle ein viertes Schaltelement (SE-B) aufweisen, mit dem im zweiten Teilgetriebe das losgelagerte antriebsseitige Zahnrad der sechsten Radebene mit der abtriebsseitigen Hohlwelle kuppelbar ist. In einer bevorzugten Ausführungsvariante kann mittels des obigen vierten Schaltelementes (SE-B) zusätzlich auch das antriebsseitige, losgelagerte Zahnrad der auf beide Teilgetriebe (A, B) schaltbaren fünften Radebene (RE-5) an die antriebsseitige Hohlwelle des zweiten Teilgetriebes (B) gekuppelt werden.
In einer technischen Umsetzung ist die Abtriebswelle achsparallel zur Eingangswelle angeordnet. Bevorzugt können die abtriebsseitigen Zahnräder der ersten und zweiten Radebene (RE1, RE-2) im ersten Teilgetriebe (A) drehfest auf einer abtriebsseitigen Hohlwelle angeordnet sein, die koaxial auf der Abtriebswelle drehbar gelagert ist. Die Abtriebswelle kann zudem ein fünftes Schaltelement (SE-F) aufweisen, mittels dem im ersten Teilgetriebe alternierend die abtriebsseitige Hohlwelle oder ein abtriebsseitiges Zahnrad der dritten Radebene (RE- 3) mit der Abtriebswelle kuppelbar ist.

In ähnlicher Weise wie im ersten Teilgetriebe können auch im zweiten Teilgetriebe die abtriebsseitigen Zahnräder der siebten und achten Radebene (RE-7, RE-8) drehfest auf einer abtriebsseitigen Hohlwelle angeordnet sein, die koaxial auf der Abtriebswelle drehbar gelagert ist. Die im zweiten Teilgetriebe (B) auf der Abtriebswelle drehgelagerte Hohlwelle kann mit Hilfe eines sechsten, einseitigen Schaltelementes (SE-E) mit der Abtriebswelle gekuppelt werden.

In einer nicht von der Erfindung umfassten Vergleichsform kann das abtriebsseitige Zahnrad der auf beide Teilgetriebe (A, B) schaltbaren fünften Radebene (RE-5) als ein Festzahnrad drehfest auf der Abtriebswelle angeordnet sein. In diesem Fall würde im Fahrbetrieb die fünfte Radebene (RE-5) ständig mitdrehen und gegebenenfalls die Drehlager vorzeitig verschleißen. Vor diesem Hintergrund ist erfindungsgemäß das abtriebsseitige Zahnrad der fünften Radebene (RE-5) lose auf der Abtriebswelle gelagert und über ein siebtes Schaltelement (SE-G) an die Abtriebswelle kuppelbar.

Wie oben erwähnt, kann der Zahnradsatz der fünften Radebene auf beide Teilgetriebe kuppelbar sein. Dadurch kann bei geringem getriebetechnischen Mehraufwand und ohne Verzicht auf den Vorteil der zugkraftunterbrechungsfreien Beschleunigung des Kraftfahrzeugs zumindest ein Vorwärtsgang übersprungen werden, also beispielsweise von einem ungeraden Vorwärtsgang verzögerungsfrei in den nächsten ungeraden Vorwärtsgang geschaltet werden. Insbesondere bei starken Motorisierungen des Kraftfahrzeugs und bei definierten Fahrbedingungen kann dies eine verbesserte, ohne Schaltverzögerungen ablaufende Beschleunigung ermöglichen.

Besonders bevorzugt kann der Zahnradsatz der fünften Radebene zumindest den 3. Vorwärtsgang des zweiten Teilgetriebes bilden, der mittel- oder unmittelbar wahlweise mit der Eingangswelle des einen oder des anderen Teilgetriebes (A, B) trieblich verbindbar ist. Daraus resultiert neben der regulären Schaltstrategie eine Variante, in der vom 1. Gang in den 3. Gang und bei Bedarf von diesem in den 5.Gang zugkraftunterbrechungsfrei geschaltet werden kann.

Ist bei einer entsprechenden, getriebetechnischen Auslegung der Zahnradsatz der fünften Radebene auch in den Leistungsfluss des 1. Vorwärtsganges eingebunden, so kann auch hier das Teilgetriebe gewechselt werden, woraus ein zusätzlicher Freiheitsgrad in der Funktionalität geschaffen ist.

In einer bevorzugten Ausgestaltung der Erfindung kann das Festzahnrad des auf beide Teilgetriebe schaltbaren Zahnradsatzes der fünften Radebene auf der gemeinsamen Abtriebswelle des Doppelkupplungsgetriebes angeordnet sein, während das korrespondierende, schaltbare Loszahnrad steuerungstechnisch einfach mit dem dritten Schaltelement (SE-D) des ersten Teilgetriebes (A) oder mit dem fünften Schaltelement (SE-B) des zweiten Teilgetriebes (B) kuppelbar ist. Die Schaltelemente können dabei Doppelkupplungen sein, mittels denen ein Zahnradsatz des einen Teilgetriebes oder der Zahnradsatz des anderen Teilgetriebes schaltbar ist.

In einer vorteilhaften Weiterbildung der Erfindung können bei einem 12-Gang Getriebe durch Mehrfachnutzung der die Radebenen bildenden Zahnradsätze nur acht Gangebenen verwendet werden, wobei der gemeinsam genutzte Zahnradsatz der fünften Radebene des zweiten Teilgetriebes dem ersten Teilgetriebe unmittelbar benachbart angeordnet ist. Das Doppelkupplungsgetriebe kann somit baulich relativ kurz und mit geringster Anzahl von Schaltelementen und Gangstellern ausgeführt sein.

Des Weiteren können dazu Festzahnräder mehrerer Rad- oder Gangebenen beider Teilgetriebe auf jeweils gemeinsamen Hohlwellen befestigt und diese auf der gemeinsamen Abtriebswelle drehbar gelagert sowie über Schaltkupplungen (das heißt Schaltelemente) mit der Abtriebswelle koppelbar sein.

Ferner können weitere Festzahnräder der Gangebenen auf einer Hohlwelle angeordnet sein, die auf der Eingangswelle des einen Teilgetriebes gelagert ist und die mittels einer Schaltkupplung mit dem besagten Zahnradsatz des anderen Teilgetriebes kuppelbar ist.

Schließlich können bei möglichst geringem, getriebetechnischen Aufwand die zwölf Vorwärtsgänge mittels fünf Doppelkupplungen und einer Einfachkupplung schaltbar sein, wobei vier Doppelkupplungen auf den koaxial angeordneten beiden Eingangswellen der Teilgetriebe und eine Doppelkupplung sowie eine Einfachkupplung auf der gemeinsamen Abtriebswelle positioniert sind.

Ein Ausführungsbeispiel der Erfindung ist im Folgenden anhand der beigefügten Zeichnung näher beschrieben. Es zeigen:
- Fig. 1: als Blockschaltbild ein Geschwindigkeits-Wechselgetriebe für Kraftfahrzeuge mit zwei Teilgetrieben, die über zwei lastschaltbare Kupplungen aktivierbar sind und mit 12 schaltbaren Vorwärtsgängen, wobei ein Zahnradsatz des Getriebes für beide Teilgetriebe nutzbar ist; und
- Fig. 2: eine Schaltmatrix des Wechselgetriebes nach Fig. 1.

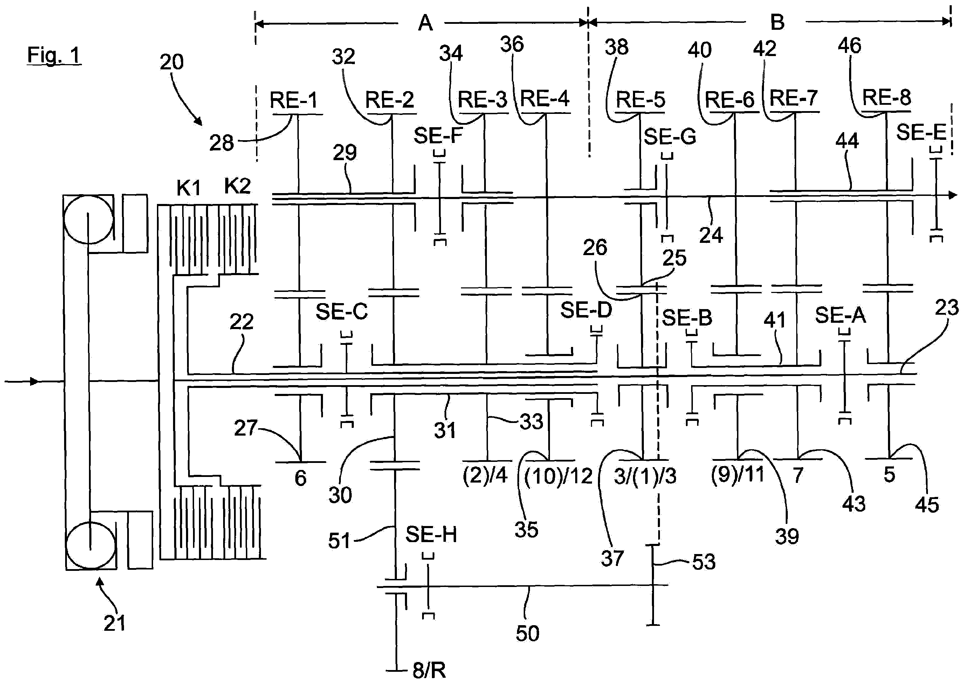

Die Fig. 1 zeigt ein Geschwindigkeits-Wechselgetriebe bzw. ein Doppelkupplungsgetriebe 20 für ein Kraftfahrzeug, mittels dem in acht Radebenen bzw. mit acht Zahnradsätzen RE-1 bis RE-8 bis zu zwölf Vorwärtsgänge 1 bis 12 schaltbar sind. Jede der Radebenen RE-1 bis RE-8 ist aus einem zur Eingangswelle 22, 23 koaxialen antriebsseitigen Zahnrad und einem zur Abtriebswelle 24 koaxialen abtriebsseitigen Zahnrad aufgebaut.

Das Wechselgetriebe 20 weist zwei zum Beispiel mit einer Brennkraftmaschine (nicht dargestellt) und einem Drehschwingungsdämpfer 21 trieblich verbundene und über zwei lastschaltbare Kupplungen K1, K2 alternierend kuppelbare Eingangswellen 22, 23 auf, von denen die Eingangswelle 22 eine Hohlwelle ist, durch die hindurch die zweite Eingangswelle 23 geführt ist. Die Drehlagerung und das korrespondierende Getriebegehäuse sind nicht dargestellt.

Die Zahnradsätze oder Radebenen RE-1 bis RE-8 sind in an sich bekannter Weise durch schaltbare Loszahnräder und durch Festzahnräder auf den Eingangswellen 22, 23 und auf einer gemeinsamen Abtriebswelle 24 in noch zu beschreibender Weise angeordnet, wobei die Zahnradsätze RE-1 bis RE-4 ein erstes Teilgetriebe A und die Zahnradsätze RE-5 bis RE-8 ein zweites Teilgetriebe B bilden.

Der Zahnradsatz RE-5 des Teilgetriebes B ist mit einem Festzahnrad 38 auf der Abtriebswelle 24 und einem schaltbaren Loszahnrad 26 auf der Eingangswelle 23 axial unmittelbar benachbart dem Teilgetriebe A derart angeordnet, dass dessen Loszahnrad 27 über eine Schaltkupplung SE-D entweder mit dem Teilgetriebe A oder über eine Schaltkupplung SE-B dem Teilgetriebe B kuppelbar ist.

Die Anordnung der übrigen Zahnradsätze ist derart, dass bei nur acht Zahnradsätzen RE-1 bis RE-8 die 12 Vorwärtsgänge realisierbar sind, wobei:
- das Loszahnrad 27 von RE-1 auf der Eingangswelle 22 und dessen Festzahnrad 28 auf einer koaxial zur Abtriebswelle 24 gelagerten Hohlwelle 29 drehfest angeordnet ist;
- ein Festzahnrad 30 von RE-2 über eine Hohlwelle 31 auf der Eingangswelle 22 gelagert und das korrespondierende Festzahnrad 32 ebenfalls auf der Hohlwelle 29 drehfest angeordnet ist;
- das Loszahnrad 27 und die Hohlwelle 31 mittels einer Schaltkupplung SE-C alternierend mit der Eingangswelle 22 kuppelbar sind;
- ein Festzahnrad 33 von RE-3 auf der Hohlwelle 31 angeordnet ist, während dessen Loszahnrad 34 oder die Hohlwelle 29 alternierend über eine Schaltkupplung SE-F mit der Abtriebswelle 24 kuppelbar sind;
- auf der Hohlwelle 31 ist ferner ein Loszahnrad 35 des Zahnradsatzes RE-4 gelagert, das mit einem Festzahnrad 36 auf der Abtriebswelle 24 kämmt;
- unmittelbar axial benachbart zum Loszahnrad 35 des Zahnradsatzes RE-4 ist das Loszahnrad 37 des Zahnradsatzes RE-5 auf der zentralen Eingangswelle 23 des Teilgetriebes B gelagert, das mit dem weiteren Festzahnrad 38 auf der Abtriebswelle 24 in Eingriff ist;
- die beiden Loszahnräder 35, 37 sind über eine weitere Schaltkupplung SE-D alternierend mit der Hohlwelle 31 auf der Eingangswelle 22 kuppelbar;
- zudem ist das Loszahnrad 37 über eine zweite Schaltkupplung SE-B mit einer auf der Eingangswelle 23 gelagerten Hohlwelle 41 kuppelbar, wobei die Hohlwelle 41 ein Loszahnrad 39 des Zahnradsatzes RE-6 trägt, das ebenfalls über die Schaltkupplung SE-B an die Hohlwelle 41 kuppelbar ist;
- das Loszahnrad 39 des Zahnradsatzes RE-6 kämmt mit einem weiteren Festzahnrad 40 auf der Abtriebswelle 24;
- die Hohlwelle 41 weist ferner ein Festzahnrad 43 des Zahnradsatzes RE-7 auf, das mit einem Festzahnrad 42 auf einer auf der Abtriebswelle 24 drehbar gelagerten Hohlwelle 44 in Eingriff ist;
- die Hohlwelle 41 auf der Eingangswelle 23 kann ferner über eine Schaltkupplung SE-A mit der Eingangswelle 23 verbunden werden, wobei die Schaltkupplung SE-A alternierend auch ein Loszahnrad 45 des Zahnradsatzes RE-8 an die Eingangswelle 23 kuppelt;
- das Festzahnrad 46 des Zahnradsatzes RE-8 ist analog zum Festzahnrad 42 des RE-7 auf der Hohlwelle 44 angeordnet, wobei die Hohlwelle 44 über eine Einfach-Schaltkupplung SE-E mit der Abtriebswelle 24 verbindbar ist.

Die Schaltkupplungen SE-C, SE-F, SE-D, SE-B und SE-A können als bekannte und bei Schaltgetrieben übliche Doppel-Synchronkupplungen (mit einer Stellung deren Schaltmuffen auf der Zeichnung Fig. 1 nach links (li) oder nach rechts (re) und die Schaltkupplung SE-E als eine Einfach-Synchronkupplung (Schaltstellung li) ausgeführt sein, die elektronisch gesteuert über entsprechende elektrisch/hydraulisch betätigte Aktoren jeweils aus einer Neutralstellung (wie gezeichnet) geschaltet werden.

Die Kupplungen K1, K2 können hydraulisch lastschaltbare Lamellenkupplungen sein, die alternierend betätigt das Teilgetriebe A oder B nach entsprechender Vorwahl der Gänge in den Antriebskraftfluss einkuppeln.

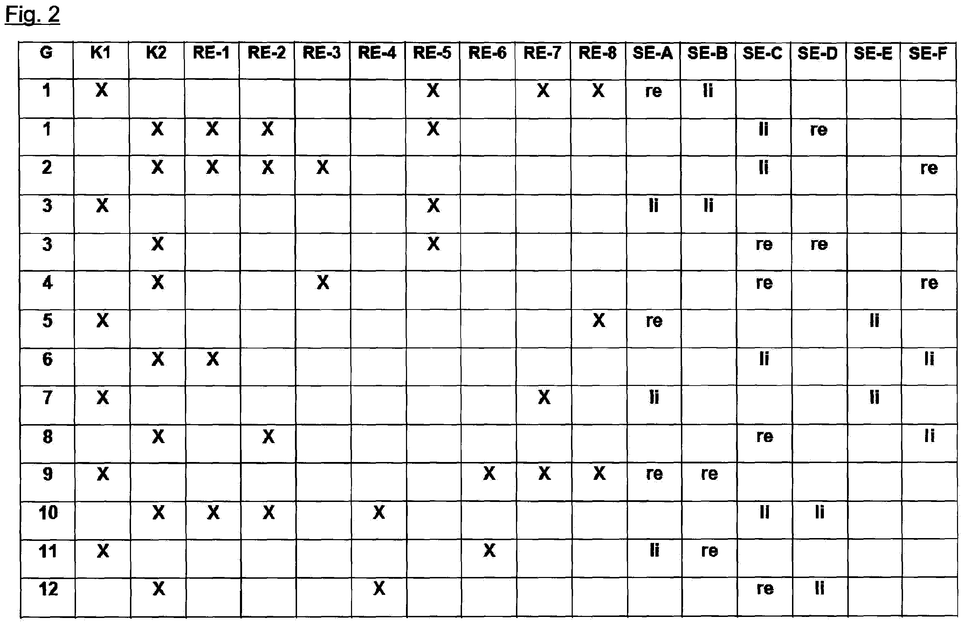

Die Vorwärtsgänge 1 bis 12 (ein gegebenenfalls erforderlicher Rückwärtsgang ist der Einfachheit halber nicht eingezeichnet) können gemäß der Schaltmatrix Fig. 2 geschaltet werden, wobei der jeweils geschaltete Gang (G) 1 bis 12 in der linken Spalte der Matrix angegeben ist. Die Kreuzchen (X) bezeichnen die in den jeweiligen Kraftfluss eingebundenen Zahnradsätze RE1 bis RE8 und die Bezeichnung (li) oder (re) die Schaltstellungen der jeweiligen Schaltkupplungen SE. Zu bemerken ist, dass die Gänge 1 und 3 in der Spalte G zweifach angegeben sind, da diese wahlweise über das Teilgetriebe B (Kupplung K1) oder das Teilgetriebe A (Kupplung K2) schaltbar sind.

Die reguläre Schaltfolge kann dementsprechend sein 1 - 2 - 3 - 4 - 5 ff., wobei der 1. Gang über die Kupplung K1 (Teilgetriebe B) und die weiteren Gänge durch alternierendes Schließen der Kupplungen K2, K1, K2, etc. erfolgt. In dem Teilgetriebe mit der offenen Kupplung kann wie bekannt der nächste Gang vorgewählt werden, wodurch durch Umschalten der Kupplungen K1, K2 ohne Unterbrechung der Zugkraft geschaltet werden kann.

In der modifizierten Schaltfolge kann der 2. Gang und gegebenenfalls auch der 4. Gang ohne Unterbrechung der Zugkraft übersprungen werden, wobei der Kraftfluss im 1.Gang über die Kupplung K1 oder K2 (Teilgetriebe A oder B) bei entsprechender Einbindung der Zahnradsätze RE-1 bis RE-8 und Stellung der Schaltkupplungen SE (siehe Matrix) gesteuert wird. Daraus resultiert, dass jeweils der 3. Gang und gegebenenfalls der 5.Gang bereits vorgewählt und durch Wechsel der lastschaltbaren Kupplung ohne Unterbrechung der Zugkraft aktivierbar ist.

Steuerbar sind somit neben der regulären Schaltfolge des Doppelkupplungsgetriebes 20 die modifizierten Schaltfolgen 1 - 3 - 4 - 5 - 6 ff. in der Folge K2, K1, K2, K1, K2 ff. oder 1 - 3 - 5 - 6, ff., in der Folge K1, K2, K1, K2 ff., wobei die Schaltfolgen abhängig von Betriebsdaten und Fahrparametern des Kraftfahrzeugs über eine elektronische Getriebesteuerung vorgebbar und/oder manuell einstellbar sind.

Wie aus Schaltmatrix der Fig. 2 weiter hervorgeht, sind die Vorwärtsgänge 3 bis 8 sowie 11 und 12 als Direktgänge ausgelegt, die jeweils genau eine in den Momentenfluss geschaltete Radebene aufweisen. Im Unterschied dazu sind die Vorwärtsgänge 1, 2 und 9 sowie 10 nicht als Direktgänge, sondern als Verwindungsgänge realisiert, in denen mittels der Schaltelemente SE-A bis SE-G jeweils genau drei Radebenen in Reihe kombiniert in den Momentenfluss geschaltet sind. Beispielhaft sind im ersten Vorwärtsgang (Verwindungsgang) die achte, siebte und fünfte Radebene RE-8, RE-7 und RE-5 im Momentenfluss geschaltet. Im 2. Vorwärtsgang (Verwindungsgang) sind die erste, zweite und dritte Radebene RE-1, RE-2, RE-3 in den Momentenfluss geschaltet. Im 9. Vorwärtsgang (Verwindungsgang) sind die achte, siebte und sechste Radebene RE-8, RE-7, RE-6 geschaltet. Bei eingelegtem 10. Vorwärtsgang (Verwindungsgang) sind die erste, zweite und vierte Radebene RE-1, RE-2 und RE-4 geschaltet.

Zur Bereitstellung des jeweiligen Verwindungs-Vorwärtsgangs 1, 2 und 9 sowie 10 sind die zu schaltenden drei Radebenen entweder komplett dem ersten Teilgetriebe A oder komplett dem zweiten Teilgetriebe B zugeordnet. Das heißt dass bei einem geschalteten Verwindungs-Vorwärtsgang nur das die drei Verwindungs-Radebenen aufweisende Teilgetriebe im Momentenfluss des eingelegten Ganges eingebunden ist, während das andere Teilgetriebe vollständig vom Momentenfluss abgekoppelt ist.

Zur Bildung eines Rückwärtsganges R ist achsparallel zu den Eingangswellen 22, 23 und der Abtriebswelle 24 eine die beide Teilgetriebe A, B überbrückende Rückwärtsgangwelle 50 im nicht dargestellten Getriebegehäuse des Doppelkupplungsgetriebes gelagert. Die Rückwärtsgangwelle 50 trägt zwei Umkehrzahnräder 51, 53, von denen das erste Umkehrzahnrad 51 mit dem antriebsseitigen Zahnrad 30 der zweiten Radebene RE-2 und das zweite Umkehrzahnrad 53 mit dem antriebsseitigen Zahnrad 37 der fünften Radebene RE-5 kämmt.

Das mit der zweiten Radebene RE-2 des Teilgetriebes A zusammenwirkende erste Umkehrzahnrad 51 ist als Loszahnrad ausgeführt und mittels eines einseitig schaltbaren Schaltelements SE-H an die Rückwärtsgangwelle 50 ankuppelbar. Das mit der fünften Radebene RE-5 zusammenwirkende Umkehrzahnrad 53 ist dagegen als ein Festzahnrad ausgeführt.

Der Rückwärtsgang R wird dadurch aktiviert, dass das von der ersten Eingangswelle 22 getragene Schaltelement SE-C in der Fig. 1 nach links auf das antriebsseitige Zahnrad 30 der ersten Radebene RE-1 geschaltet wird. Zudem wird das Schaltelement SE-H nach links auf das erste Umkehrzahnrad 51 geschaltet und wird das abtriebsseitige Zahnrad 38 der Zwischen-Radebene RE-5 über das Schaltelement SE-G mit der Abtriebswelle 24 gekuppelt. Der Rückwärtsgang R ist daher ein Verwindungsgang, wobei der Momentenfluss bei geschlossener Trennkupplung K2 über die hohle Eingangswelle 22 und das antriebsseitige Zahnrad 30 der zweiten Radebene RE-2 auf das erste Umkehrzahnrad 51 und weitere über die Rückwärtsgangwelle 50 sowie das zweite Umkehrzahnrad 53 auf das abtriebsseitige Zahnrad 38 der Zwischen-Radebene RE-5 verläuft.

## Patentansprüche

1. Doppelkupplungsgetriebe für ein Kraftfahrzeug, mit über Schaltelemente schaltbaren Zahnradsätzen, die genau acht in Axialrichtung von der Eingangs- zur Ausgangsseite des Doppelkupplungsgetriebes in der Reihenfolge erste bis achte hintereinander angeordnete Radebenen (RE-1 bis RE-8) bilden, die jeweils einem ersten Teilgetriebe (A) und einem zweiten Teilgetriebe (B) zugeordnet sind, von denen das erste Teilgetriebe (A) eine erste Eingangswelle (22) aufweist und das zweite Teilgetriebe (B) eine zweite Eingangswelle (23) aufweist, und beide Teilgetriebe (A, B) eine gemeinsame Abtriebswelle (24) aufweisen, wobei die zueinander koaxialen Eingangswellen (22, 23) über je eine lastschaltbare Kupplung (K1, K2) alternierend aktivierbar sind, und dem ersten Teilgetriebe (A) die geraden Vorwärtsgänge (2, 4, 6, 8, 10, 12) sowie dem zweiten Teilgetriebe (B) die ungeraden Vorwärtsgänge (1, 3, 5, 7, 9, 11) zugeordnet sind, die bei einer Gangschaltung über die Schaltelemente (SE-A bis SE-G) schaltbar sind, wobei die Zahnradsätze der ersten bis vierten Radebenen (RE-1 bis RE-4) das erste Teilgetriebe (A) bilden und die Zahnradsätze der fünften bis achten Radebenen (RE-5 bis RE-8) das zweite Teilgetriebe (B) bilden, wobei die Eingangswellen (22, 23) frei von darauf angeordneten drehfesten Zahnrädern der Radebenen (RE-1 bis RE-8) sind, **dadurch gekennzeichnet, dass** jede Eingangswelle (22, 23) genau ein, in Axialrichtung beidseitig schaltbares Schaltelement (SE-A und SE-C) aufweist, und dass mittels des ersten Schaltelements (SE-C) die erste Eingangswelle (22) mit sämtlichen ersten bis vierten Radebenen (RE-1 bis RE-4) des ersten Teilgetriebes (A) kuppelbar oder davon abkuppelbar ist, und dass mittels des zweiten Schaltelements (SE-A) die zweite Eingangswelle (23) mit sämtlichen fünften bis achten Radebenen (RE-5 bis RE-8) des zweiten Teilgetriebes (B) kuppelbar oder davon abkuppelbar ist, dass in der Axialrichtung des ersten Schaltelements (SE-C) auf dessen einer Seite ein auf der ersten Eingangswelle (22) des ersten Teilgetriebes (A) gelagertes, antriebsseitiges Loszahnrad (27) der ersten Radebene (RE-1) und auf der anderen Seite des ersten Schaltelements (SE-C) eine auf der ersten Eingangswelle (22) koaxial gelagerte, antriebsseitige Hohlwelle (31) angeordnet ist, die über das erste Schaltelement (SE-C) alternierend mit der ersten Eingangswelle (22) kuppelbar sind, und dass die antriebsseitige Hohlwelle (31) des ersten Teilgetriebes (A) ein Festzahnrad (30, 33) der zweiten oder dritten Radebene (RE-2, RE-3) trägt, dass auf der antriebsseitigen Hohlwelle (31) des ersten Teilgetriebes (A) ein antriebsseitiges Zahnrad (35) der vierten Radebene (RE-4) lose gelagert ist, und dass die antriebsseitige Hohlwelle (31) des ersten Teilgetriebes (A) ein drittes Schaltelement (SE-D) aufweist, mit dem das losgelagerte antriebsseitige Zahnrad (35) der vierten Radebene (RE-4) mit der antriebsseitigen Hohlwelle (31) kuppelbar ist, dass das zweite Teilgetriebe (B) die, dem ersten Teilgetriebe (A) in Axialrichtung unmittelbar angrenzende fünfte Radebene (RE-5) aufweist, und dass die fünfte Radebene (RE-5) mittels des dritten Schaltelements (SE-D) mit dem ersten Teilgetriebe (A) kuppelbar ist, dass die auf beide Teilgetriebe (A, B) schaltbare fünfte Radebene (RE-5) mit ihrem antriebsseitigen Zahnrad (37) auf der zweiten Eingangswelle (23) lose gelagert ist, und dass das antriebsseitige Zahnrad (37) der auf beide Teilgetriebe (A, B) schaltbaren fünften Radebene (RE-5) mittels des dritten Schaltelements (SE-D) an die antriebsseitige Hohlwelle (31) des ersten Teilgetriebes (A) kuppelbar ist, und dass das abtriebsseitige Zahnrad (38) der fünften Radebene (RE-5) lose auf der Abtriebswelle (24) gelagert ist und über ein siebtes Schaltelement (SE-G) an die Abtriebswelle (24) kuppelbar ist.

2. Doppelkupplungsgetriebe nach Anspruch 1, **dadurch gekennzeichnet, dass** in der Axialrichtung des zweiten Schaltelements (SE-A) des zweiten Teilgetriebes (B) auf der einen Seite des zweiten Schaltelements (SE-A) ein auf der zweiten Eingangswelle (23) des zweiten Teilgetriebes (B) gelagertes, antriebsseitiges Loszahnrad (45) der achten Radebene (RE-8) und auf der anderen Seite des zweiten Schaltelements (SE-A) eine auf der zweiten Eingangswelle (23) koaxial gelagerte antriebsseitige Hohlwelle (41) angeordnet ist, und dass das antriebsseitige Loszahnrad (45) der achten Radebene (RE-8) und die antriebsseitige Hohlwelle (41) des zweiten Teilgetriebes (A) über das zweite Schaltelement (SE-A) alternierend mit der zweiten Eingangswelle (23) kuppelbar sind, und dass insbesondere die antriebsseitige Hohlwelle (41) des zweiten Teilgetriebes (A) zumindest ein Festzahnrad (43) der siebten Radebene (RE-7) trägt.

3. Doppelkupplungsgetriebe nach Anspruch 2, **dadurch gekennzeichnet, dass** auf der antriebsseitigen Hohlwelle (41) des zweiten Teilgetriebes (B) ein antriebsseitiges Zahnrad (39) der sechsten Radebene (RE-6) lose gelagert ist, und dass die antriebsseitige Hohlwelle (41) des zweiten Teilgetriebes (A) ein viertes Schaltelement (SE-B) aufweist, mit dem das losgelagerte antriebsseitige Zahnrad (39) der sechsten Radebene (RE-6) mit der antriebsseitigen Hohlwelle (41) des zweiten Teilgetriebes (B) kuppelbar ist.

4. Doppelkupplungsgetriebe nach Anspruch 3, **dadurch gekennzeichnet, dass** das antriebsseitige Zahnrad (37) der auf beide Teilgetriebe (A, B) schaltbaren fünften Radebene (RE-5) mittels des vierten Schaltelements (SE-B) an die antriebsseitige Hohlwelle (41) des zweiten Teilgetriebes (B) kuppelbar ist.

5. Doppelkupplungsgetriebe nach einem der vorhergehenden Ansprüche, **dadurch gekennzeichnet, dass** die Abtriebswelle (24) achsparallel zur ersten und zweiten Eingangswelle (22, 23) angeordnet ist, und/oder dass die abtriebsseitigen Zahnräder (28, 32) der ersten und zweiten Radebenen (RE-1, RE-2) des ersten Teilgetriebes (A).drehfest auf einer abtriebsseitigen Hohlwelle (29) des ersten Teilgetriebes (A) angeordnet sind, die koaxial auf der Abtriebswelle (24) drehbar gelagert ist.

6. Doppelkupplungsgetriebe nach Anspruch 5, **dadurch gekennzeichnet, dass** die Abtriebswelle (24) ein fünftes Schaltelement (SE-F) aufweist, mittels dem im ersten Teilgetriebe (A) alternierend die antriebsseitige Hohlwelle (29) des ersten Teilgetriebes (A) oder ein abtriebsseitiges, lose auf der Abtriebswelle (24) gelagertes Zahnrad (34) der dritten Radebene (RE-3) mit der Abtriebswelle (24) kuppelbar ist.

7. Doppelkupplungsgetriebe nach einem der vorhergehenden Ansprüche, **dadurch gekennzeichnet, dass** die abtriebsseitigen Zahnräder (42, 46) der siebten und achten Radebenen (RE-7, RE-8) des zweiten Teilgetriebes (B) drehfest auf einer abtriebsseitigen Hohlwelle (44) des zweiten Teilgetriebes (B) angeordnet sind, die koaxial auf der Abtriebswelle (24) drehbar gelagert ist.

8. Doppelkupplungsgetriebe nach Anspruch 7, **dadurch gekennzeichnet, dass** die Abtriebswelle (24) ein sechstes Schaltelement (SE-E) aufweist, mittels dem die abtriebsseitige Hohlwelle (44) des zweiten Teilgetriebes (B) mit der Abtriebswelle (24) kuppelbar ist.

## Claims

1. Dual clutch transmission for a motor vehicle, comprising gear sets which can be shifted by shift elements and which form precisely eight gear stages (RE-1 to RE-8) arranged in the axial direction from the input side to the output side of the dual clutch transmission in the order first to eighth, which each belong to a first sub-transmission (A) and a second sub-transmission (B), of which the first sub-transmission (A) comprises a first input shaft (22) and the second sub-transmission (B) comprises a second input shaft (23), and both sub-transmissions (A,B) comprise a common output shaft (24), wherein the coaxial input shafts (22, 23) can be activated in alternation via respective power-shiftable clutches (K1, K2), and wherein the even forward gears (2, 4, 6, 8, 10, 12) belong to the first sub-transmission (A) and the odd forward gears (1, 3, 5, 7, 9, 11) belong to the second sub-transmission (B), which during a gearshift can be shifted by shift elements (SE-A to SE-G), wherein the gear sets of the first to fourth gear stages (RE-1 to RE-4) form the first sub-transmission (A) and the gear sets of the fifth to eighth gear stages (RE-5 to RE-8) form the second sub-transmission (B), wherein the input shafts (22, 23) have no rotationally fixed gears of the gear stages (RE-1 to RE-8) arranged thereon, **characterised in that** each input shaft (22, 23) comprises exactly one shift element (SE-A and SE-C) shiftable on both sides in the axial direction, and **in that**, by means of the first shift element (SE-C), the first input shaft (22) can be coupled to or uncoupled from all of the first to fourth gear stages (RE-1 to RE-4) of the first sub-transmission (A), and **in that**, by means of the second shift element (SE-A), the second input shaft (23) can be coupled to or uncoupled from all of the fifth to eighth gear stages (RE-5 to RE-8) of the second sub-transmission (B), **in that** in the axial direction of the first shift element, (SE-C) on one side a drive-side idler gear (27) of the first gear stage (RE-1) is arranged mounted on the first input shaft (22) of the first sub-transmission (A) and on the other side of the first shift element (SE-C) a drive-side hollow shaft (31) is arranged coaxially mounted on the first input shaft (22), which can be coupled in alternation to the first input shaft (22) by means of the first shift element (SE-C), and **in that** the drive-side hollow shaft (31) of the first sub-transmission (A) carries a fixed gear (30, 33) of the second or third gear stage (RE-2, RE-3), **in that** a drive-side gear (35) of the fourth gear stage (RE-4) is loosely mounted on the drive-side hollow shaft (31) of the first sub-transmission (A), and **in that** the drive-side hollow shaft (31) of the first sub-transmission (A) comprises a third shift element (SE-D), by means of which the loosely mounted drive-side gear (35) of the fourth gear stage (RE-4) can be coupled to the drive-side hollow shaft (31), **in that** the second sub-transmission (B) comprises the fifth gear stage (RE-5) immediately adjacent in the axial direction to the first sub-transmission (A), and **in that** the fifth gear stage (RE-5) can be coupled to the first sub-transmission (A) by means of the third shift element (SE-D), **in that** the fifth gear stage (RE-5) that is shiftable on both sub-transmissions (A, B) is loosely mounted on the second input shaft (23) by means of its drive-side gear (37), and **in that** the drive-side gear (37) of the fifth gear stage (RE-5) that is shiftable on both sub-transmissions (A, B) can be coupled to the drive-side hollow shaft (31) of the first sub-transmission (A) by means of the third shift element (SE-D), and **in that** the output-side gear (38) of the fifth gear stage (RE-5) is loosely mounted on the output shaft (24) and can be coupled to the output shaft (24) by means of a seventh shift element (SE-G).

2. Dual clutch transmission according to claim 1, **characterised in that**, in the axial direction of the second shift element (SE-A) of the second sub-transmission (B), on one side of the second shift element (SE-A) a drive-side idler gear (45) of the eighth gear stage (RE-8) is arranged mounted on the second input shaft (23) of the second sub-transmission (B), and on the other side of the second shift element (SE-A) a drive-side hollow shaft (41) is arranged coaxially mounted on the second input shaft (23), and **in that** the drive-side idler gear (45) of the eighth gear stage (RE-8) and drive-side hollow shaft (41) of the second sub-transmission (A) can be coupled in alternation to the second input shaft (23) via the second shift element (SE-A), and **in that**, in particular, the drive-side hollow shaft (41) of the second sub-transmission (A) carries at least one fixed gear (43) of the seventh gear stage (RE-7).

3. Dual clutch transmission according to claim 2, **characterised in that** a drive-side gear (39) of the sixth gear stage (RE-6) is loosely mounted on the drive-side hollow shaft (41) of the second sub-transmission (B), and **in that** the drive-side hollow shaft (41) of the second sub-transmission (A) comprises a fourth shift element (SE-B), by means of which the loosely mounted drive-side gear (39) of the sixth gear stage (RE-6) can be coupled to the drive-side hollow shaft (41) of the second sub-transmission (B).

4. Dual clutch transmission according to claim 3, **characterised in that** the drive-side gear (37) of the fifth gear stage (RE-5) which is shiftable on both sub-transmissions (A, B), can be coupled by means of the fourth shift element (SE-B) to the drive-side hollow shaft (41) of the second sub-transmission (B).

5. Dual clutch transmission according to any of the preceding claims, **characterised in that** the output shaft (24) is arranged with axis parallel to the first and second input shaft (22, 23), and/or **in that** the output-side gears (28, 32) of the first and second gear stages (RE-1, RE-2) of the first sub-transmission (A) are arranged rotationally fixed on an output-side hollow shaft (29) of the first sub-transmission (A), which is rotatably mounted coaxially on the output shaft (24).

6. Dual clutch transmission according to claim 5, **characterised in that** the output shaft (24) comprises a fifth shift element (SE-F), by means of which, in the first sub-transmission (A), the drive-side hollow shaft (29) of the first sub-transmission (A), or an output-side gear (34) of the third gear stage (RE-3) that is loosely mounted on the output shaft (24), can be coupled in alternation to the output shaft (24).

7. Dual clutch transmission according to any of the preceding claims, **characterised in that** the output-side gears (42, 46) of the seventh and eighth gear stages (RE-7, RE-8) of the second sub-transmission (B) are arranged rotationally fixed on an output-side hollow shaft (44) of the second sub-transmission (B), which is rotatably mounted coaxially on the output shaft (24).

8. Dual clutch transmission according to claim 7, **characterised in that** the output shaft (24) comprises a sixth shift element (SE-E), by means of which the output-side hollow shaft (44) of the second sub-transmission (B) can be coupled to the output shaft (24).

## Revendications

1. Boîte de vitesses à double embrayage pour un véhicule à moteur, comprenant des ensembles de roues dentées commutables via des éléments de commutation, qui forment exactement huit premier à huitième plans d'alignement de roues (RE-1 à RE-8) agencés l'un derrière l'autre dans l'ordre dans la direction axiale du côté d'entrée au côté de sortie de la boîte de vitesses à double embrayage, qui sont affectés respectivement à une première boîte de vitesses partielle (A) et à une seconde boîte de vitesses partielle (B), dans lesquelles la première boîte de vitesses partielle (A) présente un premier arbre d'entrée (22) et la seconde boîte de vitesses partielle (B) présente un second arbre d'entrée (23) et les deux boîtes de vitesses partielles (A, B) présentent un arbre de sortie commun (24), dans laquelle les arbres d'entrée (22, 23) coaxiaux l'un à l'autre peuvent être activés en alternance via respectivement un embrayage à commande assistée (K1, K2) et les marches avant paires (2, 4, 6, 8, 10, 12) sont affectées à la première boîte de vitesses partielle (A) et les marches avant impaires (1, 3, 5, 7, 9, 11) à la seconde boîte de vitesses partielle (B), qui peuvent se commuter via les éléments de commutation (SE-A à SE-G) lors d'un changement de vitesses, dans laquelle les ensembles de roues dentées des premier à quatrième plans d'alignement de roues (RE-1 à RE-4) forment la première boîte de vitesses partielle (A) et les ensembles de roues dentées des cinquième à huitième plans d'alignement de roues (RE-5 à RE-8) forment la seconde boîte de vitesses partielle (B), dans laquelle les arbres d'entrée (22, 23) sont libres de roues dentées des plans d'alignement de roues (RE-1 à RE-8) solidaires en rotation agencées sur ceux-ci, **caractérisée en ce que** chaque arbre d'entrée (22, 23) présente exactement un élément de commutation (SE-A et SE-C) commutable des deux côtés dans la direction axiale et dans laquelle, au moyen du premier élément de commutation (SE-C), le premier arbre d'entrée (22) peut être couplé à la totalité des premier au quatrième plans d'alignement de roues (RE-1 à RE-4) de la première boîte de vitesses partielle (A) ou en être désaccouplé et, au moyen du deuxième élément de commutation (SE-A), le second arbre d'entrée (23) peut être couplé à la totalité des cinquième au huitième plans d'alignement de roues (RE-5 à RE-8) de la seconde boîte de vitesses partielle (B) ou en être désaccouplé, dans la direction axiale du premier élément de commutation (SE-C), sur un côté de celui-ci est agencée une roue dentée libre côté entraînement (27) du premier plan d'alignement de roues (RE-1) monté sur le premier arbre d'entrée (22) de la première boîte de vitesses partielle (A) et sur l'autre côté du premier élément de commutation (SE-C) est agencé un arbre creux côté entraînement (31) monté coaxialement sur le premier arbre d'entrée (22), qui peuvent être couplés en alternance avec le premier arbre d'entrée (22) via le premier élément de commutation (SE-C) et l'arbre creux côté entraînement (31) de la première boîte de vitesses partielle (A) supporte une roue dentée fixe (30, 33) du deuxième ou troisième plan d'alignement de roues (RE-2, RE-3), sur l'arbre creux côté entraînement (31) de la première boîte de vitesses partielle (A) est montée libre une roue dentée côté entraînement (35) du quatrième plan d'alignement de roues (RE-4) et l'arbre creux côté entraînement (31) de la première boîte de vitesses partielle (A) présente un troisième élément de commutation (SE-D) avec lequel la roue dentée côté entraînement montée libre (35) du quatrième plan d'alignement de roues (RE-4) peut être couplée avec l'arbre creux côté entraînement (31), la seconde boîte de vitesses partielle (B) présente le cinquième plan d'alignement de roues (RE-5) avoisinant directement la première boîte de vitesses partielle (A) dans la direction axiale et le cinquième plan d'alignement de roues (RE-5) peut être couplé à la première boîte de vitesses partielle (A) au moyen du troisième élément de commutation (SE-D), le cinquième plan d'alignement de roues (RE-5) commutable sur les deux boîtes de vitesses partielles (A, B) est monté libre avec sa roue dentée côté entraînement (37) sur le second arbre de sortie (23) et la roue dentée côté entraînement (37) du cinquième plan d'alignement de roues (RE-5) commutable aux deux boîtes de vitesses partielles (A, B) peut être couplée au moyen du troisième élément de commutation (SE-D) sur l'arbre de sortie côté entraînement (31) de la première boîte de vitesses partielle (A) et la roue dentée côté sortie (38) du cinquième plan d'alignement de roues (RE-5) est montée libre sur l'arbre de sortie (24) et peut être couplée à l'arbre de sortie (24) via un septième élément de commutation (SE-G).

2. Boîte de vitesses à double embrayage selon la revendication 1, **caractérisée en ce qu'**est agencée dans la direction axiale du deuxième élément de commutation (SE-A) de la seconde boîte de vitesses partielle (B) sur le premier côté du deuxième élément de commutation (SE-A) une roue dentée libre côté entraînement (45) du huitième plan d'alignement de roues (RE-8) montée sur le second arbre d'entrée (23) de la seconde boîte de vitesses (B) et, sur l'autre côté du deuxième élément de commutation (SE-A), un arbre creux côté entraînement (41) monté coaxialement sur le second arbre d'entrée (23), et la roue dentée libre côté entraînement (45) du huitième plan d'alignement de roues (RE-8) et l'arbre creux côté entraînement (41) de la seconde boîte de vitesses partielle (A) peuvent être couplés en alternance via le deuxième élément de commutation (SE-A) avec le second arbre d'entrée (23) et, en particulier, l'arbre creux côté entraînement (41) de la seconde boîte de vitesses partielle (A) supporte au moins une roue dentée fixe (43) du septième plan de d'alignement de roues (RE-7).

3. Boîte de vitesses à double embrayage selon la revendication 2, **caractérisée en ce qu'**est montée libre sur l'arbre creux côté entraînement (41) de la seconde boîte de vitesses partielle (B) une roue dentée côté entraînement (39) du sixième plan d'alignement de roues (RE-6) et l'arbre creux côté entraînement (41) de la seconde boîte de vitesses partielle (A) présente un quatrième élément de commutation (SE-B) avec lequel la roue dentée côté entraînement montée libre (39) du sixième plan d'alignement de roues (RE-6) peut être couplée avec l'arbre creux côté entraînement (41) de la seconde boîte de vitesses partielle (B).

4. Boîte de vitesses à double embrayage selon la revendication 3, **caractérisée en ce que** la roue dentée côté entraînement (37) du cinquième plan d'alignement de roues (RE-5) commutable sur les deux boîtes de vitesses partielles (A, B) peut être couplée avec l'arbre creux côté entraînement (41) de la seconde boîte de vitesses partielle (B) au moyen du quatrième élément de commutation (SE-B).

5. Boîte de vitesses à double embrayage selon l'une quelconque des revendications précédentes, **caractérisée en ce que** l'arbre de sortie (24) est agencé avec un axe parallèle aux premier et deuxième arbres d'entrée (22, 23) et/ou les roues dentées côté sortie (28, 32) des premier et deuxième plans d'alignement de roues (RE-1, RE-2) de la première boîte de vitesses partielle (A) sont agencées solidaires en rotation sur un arbre creux côté sortie (29) de la première boîte de vitesses partielle (A), qui est montée à rotation coaxialement sur l'arbre de sortie (24).

6. Boîte de vitesses à double embrayage selon la revendication 5, **caractérisée en ce que** l'arbre de sortie (24) présente un cinquième élément de commutation (SE-F), au moyen duquel, dans la première boîte de vitesses partielle (A), l'arbre creux côté sortie (29) de la première boîte de vitesses partielle (A) ou une roue dentée côté sortie (34) du troisième plan d'alignement de roues (RE-3) montée libre sur l'arbre de sortie (24) peut être couplé(e) en alternance avec l'arbre de sortie (24).

7. Boîte de vitesses à double embrayage selon l'une quelconque des revendications précédentes, **caractérisée en ce que** les roues dentées côté sortie (42, 46) du septième et du huitième plan d'alignement de roues (RE-7, RE-8) de la seconde boîte de vitesses partielle (B) sont agencées solidaires en rotation sur un arbre creux côté sortie (44) de la seconde boîte de vitesses partielle (B) qui est montée à rotation coaxialement sur l'arbre de sortie (24).

8. Boîte de vitesses à double embrayage selon la revendication 7, **caractérisée en ce que** l'arbre de sortie (24) présente un sixième élément de commutation (SE-E) au moyen duquel l'arbre creux côté sortie (44) de la seconde boîte de vitesses partielle (B) peut être couplé avec l'arbre de sortie (24).
